# EUROPEAN PATENT APPLICATION

(11) **EP 4 506 886 A1**
(43) Date of publication of application: **12.02.2025**
(21) Application number: 23190690.0
(22) Date of filing: 09.08.2023
(51) Int. Cl.: G06T 7/00, G06T 7/33

(54) **DETERMINING POTENTIALLY COMPROMISING FEATURES IN MEDICAL IMAGES**

(71) Applicant: Koninklijke Philips N.V., 5656 AG Eindhoven (NL)
(72) Inventor: VON BERG, Jens, 5656 AG Eindhoven (NL); DESHPANDE, Hrishikesh Narayanrao, 5656 AG Eindhoven (NL); BUELOW, Thomas, 5656 AG Eindhoven (NL); HARDER, Tim Philipp, 5656 AG Eindhoven (NL)
(74) Representative: Philips Intellectual Property & Standards

(57) **Abstract**

The invention is directed to a processing method for medical and optical images. In a first step, the method receives (101) a medical image and at least one optical image. In a second step, the method processes (102) the medical image and the at least one optical image to determine whether a feature in the optical image compromises the medical image or whether an anomaly in the medical image is caused by a feature in the optical image. In this manner a viewer of the medical and/or the optical image may be informed on the presence and cause of structures in the medical image.

## Description

### FIELD OF THE INVENTION

The invention relates to image processing in medical imaging.

### BACKGROUND OF THE INVENTION

Medical imaging is an imaging technique to view into a subjects body and locate, identify and/or monitor for example tissue, bones, tumors, brain function, organ function, fetuses, etc. Interpreting the medical images is however a complex task which requires years of training and experience to master successfully, and even for experienced professionals, it can occasionally be challenging to distinguish between features in the medical images. Furthermore, the professionals responsible for interpreting and taking the medical image may not always be the same, and the professional interpreting the image may thus not be aware of the outside picture of the subject during medical image acquisition. For example, patients admitted to a trauma unit after an accident may have debris pieces in and/or on their body. If left in and/or on the body, this debris may be visible on the medical image (e.g., metal on X-ray images) when scanning for broken bones. If not careful, this debris may be misinterpreted as undesired or even malignant pathological structures or may obscure the view of potential regions of interest. While some foreign objects like coins, button batteries, electrodes, tubes, metal jewelry, etc. are known to be identifiable from the X-ray images, objects like plastic parts of clothing (e.g., shirt buttons), fabric from clothes, supporting devices (e.g., pillows), are rather hard to identify in X-ray images. Even body parts like hair, nipples, scars, warts, are often mistaken for radiological signs from inside the body in X-ray images. The current workflow of preparing subjects for a medical imaging exam involves preparing patients in order to avoid having any foreign objects in the medical images. However, this is not always possible due to time pressure, patient instability and/or patient un-cooperativeness.

### SUMMARY OF THE INVENTION

It is, inter alia, an object of the invention to provide a solution that enables the reviewer of a medical image to gain insight into potentially compromising features. For this goal, the invention proposes a method that processes a medical image and an optical image to locate and identify potentially compromising features in the optical image that may cause a medical image anomaly or in any other form compromise the medical image.

The invention is defined by the independent claims. Advantageous embodiments are defined in the dependent claims.

In accordance with the invention there is provided a computer-implemented method for processing medical and optical images, the method comprising:
- receiving:
   - a medical image of a subject; and
   - at least one optical image of the subject; and
- processing the at least one optical image and the medical image to:
   - determine a location of a potentially compromising feature in the at least one optical image; and
   - based on the determined location of the potentially compromising feature in the at least one optical image, determine a corresponding location in the medical image. In this manner, a location of a potentially compromising feature (e.g., jewelry, clothing, medical equipment, scars, debris, etc.) that may be attached to or on the subject that is being imaged, may be identified in the medical image assisting or alerting the reviewer of the medical image of a potential medical image compromise. For example, a reviewer could be alerted of a hair braid in lung X-ray imaging.

In an example, the step of processing the at least one optical image and the medical image further comprises:
- based on the determined location of the potentially compromising feature in the at least one optical image, determining a corresponding location on the subject, and
   wherein the step to determine the corresponding location in the medical image is further based on the corresponding location on the subject. In this manner, the position and/or posture of the subject in the medical image and the at least one optical image does not need to be the same.

In an example, the at least one optical image comprises a sequence of optical images (300a) obtained during positioning of the subject for taking the medical image; and,
wherein the step of processing the at least one optical image and the medical image further comprises:
- determining an optical image of the sequence of optical images in which
   - the corresponding location on the subject is visible and/or
   - the location of the potentially compromising feature in the at least one optical image is visible. In this manner, a video feed of patient positioning can for example be used to identify potentially compromising features that are at the time of taking the medical image obscured to the view from the optical image sensor taking the optical image.

In an example, the step of processing the at least one optical image and the medical image, further comprises:
- determining a probability of a presence of the potentially compromising feature in the medical image. In other words, providing a confidence with regard to whether the method determined a potentially compromising feature to be compromising and/or to be at a particular location.

In an example, the method may further comprise:
- determining whether the corresponding location in the medical image interferes with a region of interest. In this way, a reviewer of the medical image may for example be assisted in taking a decision for a re-take of the medical image. Interference of the corresponding location in the medical image with a region of interest may be interpreted as the corresponding location influencing the view of the region of interest. For example, in that the corresponding location overlaps at least partially with the region of interest, at object at the corresponding location obstructs at least partially the view of the region of interest, or influences the view of the region of interest in any other way.

In accordance with the invention there is provided a computer-implemented method for processing medical and optical images, the method comprising:
- receiving:
   - a medical image of a subject; and
   - at least one optical image of the subject; and
- processing the at least one optical image and the medical image to:
   - determine a location of an anomaly in the medical image; and
   - based on the determined location of the anomaly in the medical image, determine a corresponding location in the at least one optical image. In this manner, a reviewer of the medical image may be enabled to look at the same location on the subject in the optical image to assist in taking a decision whether the anomaly is induced by a feature visible in the optical image or not.

In an example, processing the at least one optical image and the medical image, further comprises,
- based on the determined location of the anomaly in the medical image, determining a corresponding location on the subject; and
   wherein the step to determine the corresponding location in the at least one optical image is further based on the corresponding location on the subject. In this manner, the position and/or posture of the subject in the medical image and the at least one optical image does not need to be the same.

In an example, the at least one optical image comprises a sequence of optical images obtained during positioning of the subject for taking the medical image; and,
wherein the step of processing the at least one optical image and the medical image further comprises:
- determining an optical image of the sequence of optical images in which
   - the corresponding location on the subject is visible and/or
   - the corresponding location in the at least one optical image is visible. In this manner, a video feed of patient positioning can for example be used to identify potentially compromising features that are at the time of taking the medical image obscured to the view from the optical image sensor taking the optical image.

In an example, the step of processing the at least one optical image and the medical image further comprises:
- determining a probability of a cause of the anomaly by a potentially compromising feature at the corresponding location in the at least one optical image. In other words, providing a confidence with regard to whether the anomaly is caused by a potentially compromising feature according to the invention.

In an example, the method may further comprise:
- determining whether the location of the anomaly in the medical image interferes with a region of interest. In this way, a reviewer of the medical image may for example be assisted in taking a decision for a re-take of the medical image. Interference of the corresponding location in the medical image with a region of interest may be interpreted as the corresponding location influencing the view of the region of interest. For example, in that the corresponding location overlaps at least partially with the region of interest, at object at the corresponding location obstructs at least partially the view of the region of interest, or influences the view of the region of interest in any other way.

In an example, the method may further comprise:
- aligning at least one of the at least one optical image and the medical image with respect to each other.

In an example the step of processing the at least one optical image and the medical image is performed with a machine learning model, wherein optionally the machine learning model is trained by a plurality of image pairs, each image pair comprising:
- an annotated medical image of the subject and
- at least one corresponding annotated optical image of the subject.

In accordance with the invention there is provided a medical image processing system, the system comprising:
- a processor configured to perform all the steps of any of the methods as disclosed herein.

In an example, the system may further comprise:
- a medical image acquisition device configured to acquire the medical image;
- an optical imaging sensor configured to acquire the at least one optical image; and
- a display configured to display the medical image and/or the at least one optical image.

In accordance with the invention there is provided a computer-program product or non-transitory medium comprising instructions that, when executed by a processor, cause the processor to perform all of the steps of any of the methods as disclosed herein.

These and other aspects of the invention will be apparent from and elucidated with reference to the embodiments described hereinafter.

### BRIEF DESCRIPTION OF THE DRAWINGS

Fig. 1 shows a box diagram of a method in accordance with an aspect of the invention
Fig. 2A shows a sequence of optical images of a subject in accordance with an embodiment of the invention.
Fig. 2B shows a medical image of a subject in accordance with an embodiment of the invention.
Fig. 3A shows optical images of different views of a subject in accordance with an embodiment of the invention.
Fig. 3B shows a medical image of a subject in accordance with an embodiment of the invention.
Fig. 4 shows a processor circuit in accordance with an embodiment of the invention.
Fig. 5 shows an exemplary medical imaging system in accordance with an embodiment of the invention.

### DESCRIPTION OF EMBODIMENTS

The invention relates to determining locations at risk of compromising features in medical images. In particular, the invention proposes to determine said locations at risk of compromising features based on both, medical image and optical image input, wherein the optical image may comprise additional information regarding the source and/or cause of the compromising features in the medical image. The invention as described is envisioned particularly for medical imaging systems, including but not limited to X-ray imaging systems, Computed Tomography (CT) imaging systems, Magnetic Resonance (MR) imaging systems and ultrasound imaging systems.

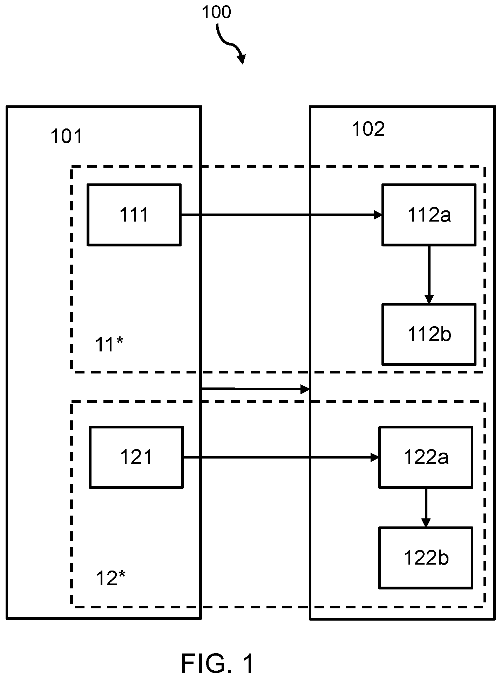

A method 100 in accordance with the inventive concept the invention is shown in Fig. 1. The method 100 comprises a first step 101 of receiving:
- a medical image of a subject; and
- at least one optical image of the subject.

The medical image may for example be a CT image, a MR image, an X-ray image, an ultrasound image, etc. The optical image may for example be a 2D photograph such as a RGB image or a 3D image such as a RGB(D) image. The at least one optical image may further be a singular image of a subject posing for a photograph prior to a medical imaging scan. Alternatively, the at least one medical image may comprise a sequence of optical images. For example, a sequence of medical images obtained during positioning of the subject for taking the medical image. Such a sequence of optical images or video-feed is typically available for example for X-ray exams.

In a second step 102, the method comprises a step of processing the medical image and the at least one optical image to determine a location in the medical image that may be compromised by a compromising feature. Potentially compromising features as envisioned by the inventors are any features that are visible in optical images and which may be visible in the medical image and thus may compromise the view of a viewer of the medical image. A non-exhaustive list of such potentially compromising features includes for example: nipples, warts, scars, hairs and foreign objects (e.g., buttons, jewelry, medical equipment). In this manner, the method according to the inventive concept provides an efficient and simple way for a viewer of the medical image to compare the medical image to the external circumstances of when taking the medical image, without requiring being present during medical image acquisition.

The methods as disclosed herein, may also be used in combination with computer aided diagnostic tools. In particular, computer aided diagnostic tools may benefit from information regarding compromising features in medical images and may be able to request additional medical images (e.g., retakes) or adjust the diagnosis result or confidence based on a detected compromising feature in the medical image or a probability of a compromising feature in the medical image.

In a particular implementation, the method 100 comprises the steps 111, 112a and 112b (also denoted as method 11^{∗}) shown in Fig. 1. According to Fig. 1, the method 11^{∗} for determining locations likely to include compromising feature in medical images comprises a first step 111 of receiving:
- a medical image of a subject; and
- at least one optical image of the subject.

The second step of method 11^{∗} comprises processing 112 the at least one optical image and the medical image to:
- determine 112a a location of a potentially compromising feature in the at least one optical image; and
- based on the determined location of the potentially compromising feature in the at least one optical image, determine 112b a corresponding location in the medical image. The corresponding location in the medical image may include the potentially compromising feature. Further, the corresponding location in the medical image should be understood as a location in the medical image that comprises the same or similar location on the subject as the at least one medical image. In this manner, the method 11^{∗} may thus detect a visible foreign object (e.g., ECG (Electrocardiography) pads, jewelry, piercings, etc.) or other type of potentially compromising feature (e.g., hair, nipple, wart, scar) in one of the at least one optical image and determine a corresponding location in the medical image. In further examples, the corresponding location in the medical image may further be highlighted using for example visual or graphical identifiers visible on a display showing the medical image, to help a viewer of the medical image identify the corresponding location that may be compromised. In an example, the at least one optical image comprising the compromising feature may further be displayed side-by-side. In this manner easing comparison between the medical image and the at least one optical image to the viewer.

The step 112 (i.e., step 102 when specific to method 11^{∗}, thus including steps 112a and 112b) of processing the at least one optical image and the medical image may further comprise to:
- based on the determined location of the potentially compromising feature in the at least one optical image, determine a corresponding location on the subject, and
   wherein the step to determine the corresponding location in the medical image is further based on the corresponding location on the subject. In an example, this step involves determining the corresponding location on a 2D or 3D model of the subject. In this manner, the relation between the medical image and the at least one optical image may become independent on field of view and/or patient posture. In other words, the medical image and the at least one optical image may be taken from different angles and/or different times. For example, an optical image of a subject may be taken prior to acquiring the medical image with the subject in a different posture. For example, before a medical imaging scan a standing photograph may be taken of the subject. The step of determining a corresponding location on the subject may also aid in determining potentially compromising features when the at least one optical image comprises a sequence of optical images obtained during positioning of the subject for taking the medical image. In such cases the posture and/or position of the subject may differ between the optical image and the medical image, such that the determined corresponding location on the subject may help to further determine an optical image of the sequence of optical images in which the corresponding location on the subject is visible. It should be understood, that alternatively or additionally, an optical image of the sequence of optical images may also be determined wherein the location of the potentially compromising feature in the at least one optical image is visible.

Method 11^{∗} may thus include a step wherein the at least one optical image comprises a sequence of optical images obtained during positioning of the subject for taking the medical image; and, wherein the step of processing the at least one optical image and the medical image further comprises:
- determining an optical image of the sequence of optical images in which
   - the corresponding location on the subject is visible and/or
   - the location of the potentially compromising feature in the at least one optical image is visible. In this manner, an optical image may be determined in which the corresponding location on the subject and/or the location of the potentially compromising feature in the at least one optical image is not obscured due to other objects (e.g., imaging equipment) and/or subject position and posture. The inventors have recognized that this embodiment may be particularly advantageous in CT, MR and X-ray imaging, wherein objects obscured by the subjects position and/or posture, can be brought to the attention of the medical image reviewer by including the subject positioning video-feed into the analysis.

The step 112 of processing the at least one optical image and the medical image may further comprise:
- determining a probability of a presence of the potentially compromising feature in the medical image. For example, if a ring is detected in at least one optical image of a subject posing for an X-ray exam, a probability may be indicated in the region of the ring in the X-ray image indicating the likelihood that the ring is visible in the X-ray image. For a ring a high probability may be indicated (e.g., 50%, 60%, 70%, 80%, 90%, or any probability above, below or between), while for other objects such as a leather bracelet a lower probability may be indicated (e.g., 10%, 20%, 30%, 40%, 50%, or any probability above, below or between). The probability may be indicated based on a deterministic scheme or based on machine learning. For example, using trained image pairs as described in more detail below.

The method 11^{∗} may further comprise a step of:
- determining whether the corresponding location in the medical image interferes a region of interest. For example, the method 100 may detect that the corresponding location in the medical image, the location in the medical image that is likely to be compromised by a compromising feature, may overlap at least partially with a region of interest. The region of interest may have been user-defined or defined from a separate segmentation algorithm. Suitable segmentation algorithms are deemed known to persons skilled in the art.

The method 11^{∗} may further comprise a step of visualizing the results. For example, by displaying the medical image and/or at least one medical image on a display. The display may be configured to display the medical image and the at least one medical image side-by-side, so as to enable easy comparison between the determined location of the potentially compromising feature in the at least one optical image and the corresponding location in the medical image. Additionally or alternatively, the method 100 may further comprise generating visual or graphical identifiers highlighting the determined location of the potentially compromising feature in the at least one optical image and/or the corresponding location in the medical image. For example, the outline or contour of the potentially compromising feature may be highlighted in a particular color. For example, a circle or arrow may be used to indicate the corresponding location in the medical image and/or the location of the potentially compromising feature in the at least one optical image.

The step 112 of processing may be implemented in a variety of ways, including machine learning, artificial intelligence, deterministic algorithms, etc.

In an example, in steps 112 the optical image may be segmented and classified using known methods to identify and locate the potentially compromising feature. The identified location may then be located on the subject and/or the medical image according to a rule based approach. In an example, also the medical image may be segmented and classified to identify whether the medical image is compromised by the compromising feature.

In an example, steps 112 may comprise processing the optical and medical image to allow for transparency and overlaying the two images such that the viewer can locate the potentially compromising features on the medical image.

In an example, steps 112 may comprise subtracting the medical image and the optical image.

In an example, steps 112 are implemented with machine learning as detailed further below.

In a particular implementation, the method 100 comprises the steps 121, 122a and 122b (also denoted as method 12^{∗}) shown in Fig. 1. According to Fig. 1, the method 12^{∗} for determining a likely cause of an anomaly in a medical image comprises a first step 121 of receiving:
- a medical image of a subject; and
- at least one optical image of the subject.

The second step of method 12^{∗} comprises processing 102 the at least one optical image and the medical image to:
- determine 122a a location of an anomaly in the medical image; and
- based on the determined location of the anomaly in the medical image, determine 122b a corresponding location in the at least one optical image. In this manner, the method 12* enables a direct comparison of an anomaly in a medical image with its corresponding view on the subject in an optical image. Thereby providing means to identify the cause of anomalies. In this manner, a viewer of for example an X-ray image comprising a ring, can attribute the ring related artefact presence in the X-ray image to a ring in the optical image. This may be important for the diagnosing practitioner, who is often not present during image acquisition.

An anomaly according to this step may be for example any detected image degradation, such as for example (local) noise and blur. In X-ray imaging, image degradation may further include scatter radiation, ghosting, beam hardening artefacts, etc. In MR imaging, image degradation may further include susceptibility artefacts, chemical shift artefacts, truncation artefacts, etc. Some of these image degradations may be caused by the presence of objects or artefacts external to the subject's body. For example, a metal piercing would interfere with a MR machine causing image degradation and jewelry may be visible in an X-ray image. An anomaly is thus not limited to image degradation, but should also include any foreign object that may be visible in the medical image. For example, a scar on a subject may generate distortions in the medical image.

The step 122 (i.e., step 102 when specific to method 12*, thus including steps 122a and 122b) of processing the at least one optical image and the medical image may further comprise to:
- based on the determined location of the anomaly in the medical image, determining a corresponding location on the subject; and
   wherein the step to determine the corresponding location in the at least one optical image is further based on the corresponding location on the subject. In an example, this step involves determining the corresponding location on a 2D or 3D model of the subject. In this manner, the relation between the medical image and the at least one optical image may become independent on field of view and/or patient posture. In other words, the medical image and the at least one optical image may be taken from different angles and/or different times. For example, an optical image of a subject may be taken prior to acquiring the medical image with the subject in a different posture. For example, before a medical imaging scan a standing photograph may be taken of the subject. The step of determining a corresponding location on the subject may also aid in determining a corresponding location in the at least one optical image when the at least one medical image comprises a sequence of medical images obtained during positioning of the subject for taking the medical image. In such cases the posture and/or position of the subject may differ between the optical image and the medical image, such that the determined corresponding location on the subject may help to further determine an optical image of the sequence of optical images in which the corresponding location on the subject is visible. It should be understood, that alternatively or additionally, an optical image of the sequence of optical images may also be determined wherein the corresponding location in the at least one optical image is visible.

Method 12^{∗} may thus include a step wherein the at least one optical image comprises a sequence of optical images obtained during positioning of the subject for taking the medical image; and, wherein the step of processing the at least one optical image and the medical image further comprises:
- determining an optical image of the sequence of optical images in which
   - the corresponding location on the subject is visible and/or
   - the corresponding location in the at least one optical image is visible. In this manner, an optical image may be determined in which the corresponding location on the subject and/or the corresponding location in the at least one optical image is not obscured due to other objects (e.g., imaging equipment) and/or subject position and posture. The inventors have recognized that this embodiment may be particularly advantageous in CT, MR and X-ray imaging, wherein objects obscured by the subjects position and/or posture, can be brought to the attention of the medical image reviewer by including the subject positioning video-feed into the analysis.

The step 122 of processing the at least one optical image and the medical image may further comprise:
- determining a probability of a cause of the anomaly by a potentially compromising feature at the corresponding location in the at least one optical image. The probability may for example be 0% if the medical image does not comprise an anomaly. The probability may for example be greater than 90% if the anomaly is clearly identified to be for example a metal ring in an X-ray image. These probabilities may be a result of a rule-based calculation or of a machine learning based procedure that was trained on cases showing suspicious signs in the image that where either caused by real reportable anomalies or by compromising features taking into account, e.g., the appearance, location in both image kinds.

The method 12^{∗} may further comprise a step of:
- determining whether the location of the anomaly in the medical image interferes with a region of interest. For example, the method 12^{∗} may determine that the location of the anomaly may overlap at least partially with a region of interest. The region of interest may have been user-defined or defined from a separate segmentation algorithm. Suitable segmentation algorithms are known to persons skilled in the art.

The method 12^{∗} may further comprise a step of visualizing the results. For example, by displaying the medical image and/or at least one medical image on a display. The display may be configured to display the medical image and the at least one medical image side-by-side, so as to enable easy comparison between the determined location of the anomaly in the medical image and the determined corresponding location in the at least one optical image. Additionally or alternatively, the method 200 may further comprise generating visual or graphical identifiers highlighting the determined location of the anomaly in the medical image and/or the determined corresponding location in the at least one optical image. For example, the outline or contour of the location of the anomaly in the medical image may be highlighted in a particular color. For example, a circle or arrow may be used to indicate the corresponding location in the at least one optical image and/or the location of the anomaly in the medical image.

The step 112 of processing may be implemented in a variety of ways, including machine learning, artificial intelligence, deterministic algorithms, etc.

In an example, in steps 112 the medical image may be segmented and classified using known methods to identify and locate the anomaly. The identified location may then be located in at least one of the at least one optical images or the subject according to a rule based approach. In an example, also the at least one optical image may be segmented and classified to identify whether the optical image comprises a compromising feature. In other words whether the at least one optical image comprises the cause of the anomaly in the medical image.

In an example, steps 112 may comprise processing the optical and medical image to allow for transparency and overlaying the two images such that the viewer can locate the anomaly and any potential cause of the anomaly (e.g., a compromising feature).

In an example, steps 112 may comprise subtracting the medical image and the optical image.

In an example, steps 112 are implemented with machine learning as detailed further below.

The method 100 (that includes methods 11^{∗} and 12^{∗}) may further comprise a step of aligning the medical image and the at least one optical image with respect to each other, such that both images appears as if taken from the same position. In this manner computer algorithms implementing method 100 may be improved considerably by increasing efficiency and accuracy. This step may be particularly advantageous for X-ray machines, which often comprise subject positioning cameras positioned next to the X-ray source and only require minor modifications to either or both of the optical image and the X-ray image to align these. The alignment of the medical image and the at least one optical image may typically be performed with a trained machine learning model or with artificial intelligence.

Alignment of cameras suitable for acquiring the optical images with the medical image may be achieved by calibrating the optical image camera and/or the medical imaging sensor to establish a spatial relation between positions in the optical image and the X-ray image. For example, the optical image camera may provide a depth signal indicating distance to any object within the optical image, including the subject. From the distance information and learnt constraints about shapes of patients alignment between the optical image and the medical image may be established. This method is generally known as image registration. The basic concept may be summarized as follows:
- identify points of interest (features) within the optical image and the medical image via any suitable feature detection method including but not limited to: SIFT (Scale-Invariant Feature Transform), SURF (Speeded Up Robust Features), or ORB (Oriented FAST and Rotated BRIEF).
- find corresponding features between the two images. For example using cross-correlation.
- estimate a transformation model that best aligns the matched features. For example, a linear transformation model (like translation, rotation, and scaling), or a model such as the Random Sample Consensus method.
- apply the estimated transformation to one of the two images. This may be either the optical image or the medical image.

The step of processing the medical image and the at least one optical image according to step 102 may be implemented with machine learning or artificial intelligence. In particular, a machine learning model may be trained by a plurality of image pairs, each image pair comprising:
- an annotated medical image of the subject and
- at least one corresponding annotated optical image of the subject.

The annotations may be for example regarding the presence and/or location of compromising features. For example, a medical image and a corresponding optical image from the same or approximately the same field of view may be annotated in pairs with regard to the presence of compromising features. As detailed above a non-exhaustive list of compromising features may include: nipples, warts, scars, hairs and foreign objects (e.g., clothing, medical equipment, jewelry, etc.). The annotations of the optical image may thus comprise the presence of a nipple, hair, foreign object, etc. and the annotations of the medical image may thus comprise the respective compromised region in the medical image. It should be understood that minor differences between training for method 11^{∗} or 12^{∗} may exist. For example, the annotations on the medical image for method 12^{∗} may be named anomaly (e.g., image degradation or foreign objects). Further, in method 11^{∗} the optical images may be regarded as input and the medical images as output for the training procedure. In method 12^{∗}, on the other hand, the medical images may be regarded as input and the optical images as output for the training procedure.

In a typical machine learning training procedure, the machine learning model is trained to learn the relationship between a series of inputs and outputs. A suitable machine learning model may for example be a (deep) neural network (with encoder-decoder architecture). An example neural network may be configured and trained as follows:
i. The training process may commence with the preparation of a dataset containing pairs of known input-output examples. The input and output being as described above, and wherein the output corresponds to the desired result for each given input. For instance, in a neural network for image recognition, the input may be an image and the output may be the label or category that the image belongs to. Furthermore, the training data is typically divided into two subsets: the majority of the data is used for the actual training process, and a smaller portion is reserved for validation.
ii. In a second step the neural network may then configured. A typical network may comprise multiple layers: an input layer, one or more hidden layers, and an output layer. Each layer generally consists of interconnected nodes or 'neurons'. Each connection has an associated weight, which the network adjusts during training to learn the relationship between the inputs and the outputs. The configuration may also includes setting the activation functions for each neuron, which determine the output of a neuron given its input.
iii. Training of the neural network can be said to begin with the process of `forward propagation' :
   - the input data is fed into the input layer;
   - each input is multiplied by the corresponding weight of the connection to the next layer;
   - the results are added together; and
   - the activation function is applied to this sum to give the output of the neuron.

This process is repeated across all layers until an output is obtained.
iv. The output from the forward propagation stage is compared with the desired output, and the difference is calculated as an error (e.g., via a loss or cost function). The network may then be updated via a process known as 'backward propagation' to distribute this error back through the network and improve future predictions. By applying the chain rule of differentiation, each weight's contribution to the error is calculated. The weights are then adjusted in a way that minimally reduces the overall error. This adjustment process may be performed using a known optimization algorithm such as stochastic gradient descent.
v. Finally, stages iii and iv are repeated iteratively over multiple 'epochs' or cycles through the training dataset until the error rate of predictions is minimized. In some instances, the neural network is evaluated against the validation dataset after each epoch to help prevent overfitting.

In examples wherein sequences of optical images are to be annotated, for example sequences comprising subject positioning for a medical imaging exam, frame-by-frame annotation may be performed, or only the individual frame comprising the potentially compromising feature.

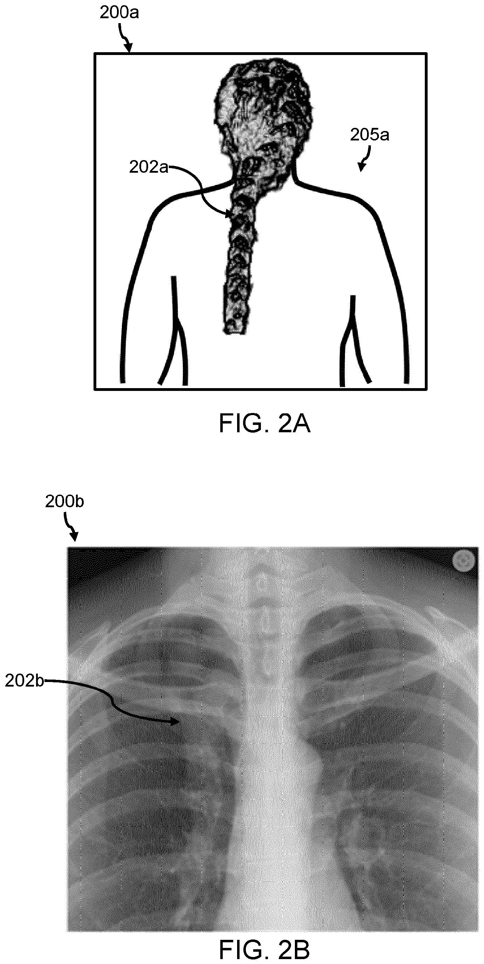

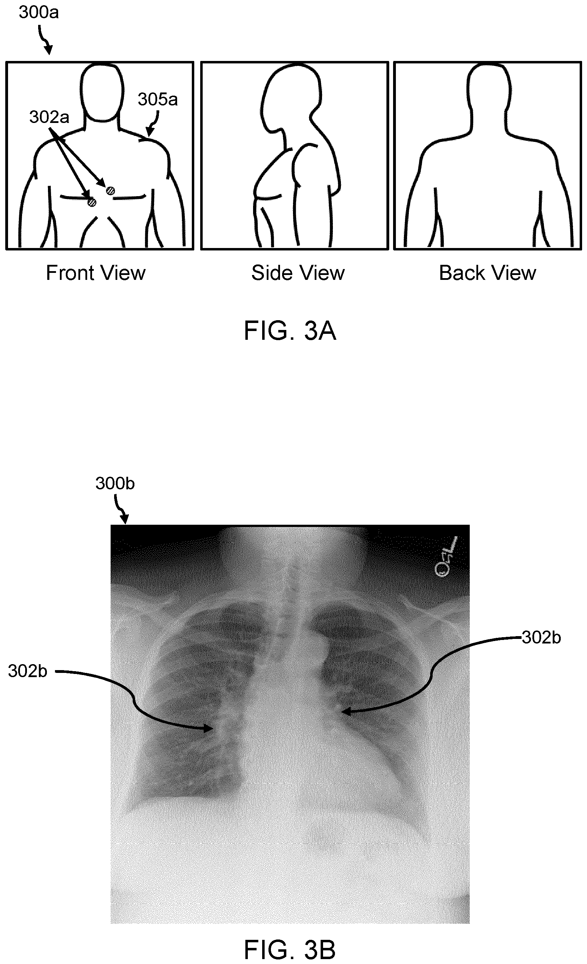

Examples of image pairs that may be used for annotation are given in Fig. 2A-B and Fig. 3A-B.

In examples, the method 100 may further comprise steps to anonymize the subject in the optical image. For example, if the face of the subject is visible in an optical image that is desired to be displayed, the face may be blurred. In other examples, the optical image destined for display may be replaced by an anatomical model of a subject. This may be a 2D model or a 3D model.

An exemplary application of method 100 is given next with respect to ECG pads as foreign objects in X-ray imaging.

An exemplary application of method 100 is given next with respect to hair as a compromising feature in X-ray imaging.

Fig. 2A shows an optical image 200a of a subject 205a positioned for an X-ray imaging exam with a visible hair braid 202a.

Fig. 2B shows a lung X-ray image 200b of the subject wherein an anomaly 202b is visible in the X-ray image. In particular, in this example the anomaly is a hair braid, which may be confused with for example opacities arising from Tuberculosis.

When considering method 11^{∗}, according to the invention the hair braid may be identified in Fig. 2A, based on which corresponding location in Fig. 2B may be determined. The corresponding location being the locations that coincide (at least approximately) with the identified hair braid.

When considering method 12^{∗}, according to the invention, anomalies may be detected in the X-ray image of Fig. 2B. In other words, the method 12^{∗} may recognize unexpected pathological structures that result from the hair braid. Method 12^{∗} may thus further determine a corresponding location in the optical image which (at least approximately) coincides with the hair braid.

For both, method 11^{∗} and method 12^{∗}, the system may further provide an alert to the viewer of the medical image of Fig. 2B and/or the optical image of Fig. 2A, such that the viewer can take an informed decision on whether the medical image is compromised by a compromising feature.

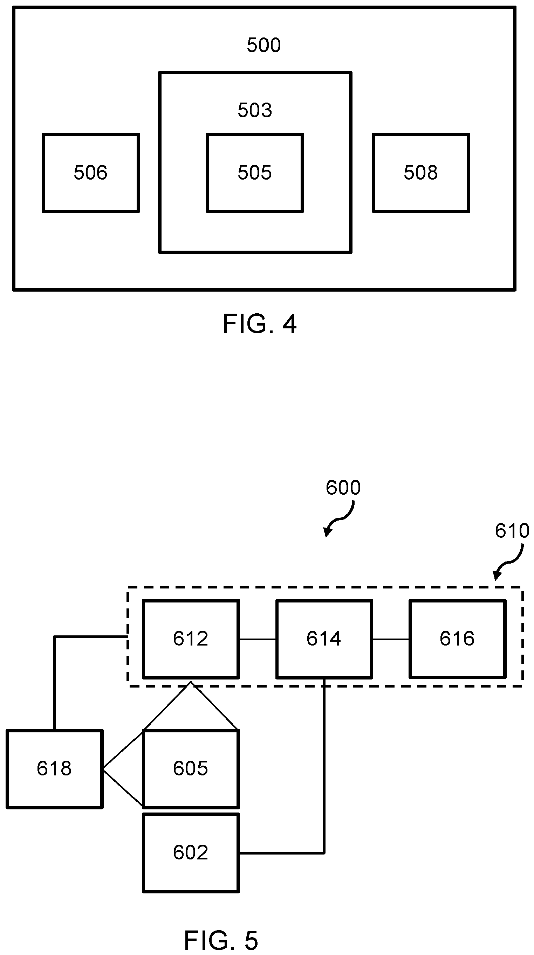

Fig. 3A shows three optical images 300a of a subject 305a in a frontal view, a side view and a back view, gathered from a patient positioning video-feed acquired during positioning of a subject 305a for a lung X-ray imaging exam. The frontal view of Fig. 4A further displays ECG pads 302a.

Fig. 3B shows a lung X-ray image 300b of the subject, wherein the ECG pads 302b may be confused for pathological structures.

When considering method 12^{∗}, according to the invention, anomalies may be detected in the X-ray image of Fig. 3B. In other words, the method 12^{∗} may recognize unexpected pathological structures. Method 12^{∗} may thus proceed to determine a corresponding location in the optical images which (at least approximately) coincides with the ECG pads. Since lung X-ray images are typically taken from the back and/or the side the thereto corresponding optical images views may not show ECG pads. Method 12^{∗} may thus analyze at least a subset of the optical images that make up the subject positioning video-feed. In each of these images, method 12^{∗} may identify the corresponding locations if there are any. For example, the corresponding locations to the anomalies 302b may be identified in both the front and the back view. The method may further include the determination of a probability of the cause of the anomaly. For example, method 12^{∗} may determine that the ECG pads 302a in the front view of Fig. 3A are likely (e.g., to 70 % or any other determined likelihood) the cause of the anomaly in the medical image 300b.

When considering method 11^{∗}, according to the invention the ECG pads may be identified in at least one of the optical images of Fig. 3A, based on which corresponding locations in Fig. 3B may be determined. The corresponding locations being the locations that coincide (at least approximately) with the ECG pads.

For both, method 11^{∗} and method 12^{∗}, the system may further provide an alert to the viewer of the medical image of Fig. 3B and/or optical image of Fig. 3A, such that the viewer can take an informed decision on whether the medical image is compromised by a compromising feature. In this case whether the ECG pads are the cause of the pathological structures or not.

According to some examples, methods 11^{∗} or 12^{∗} may further provide probabilities with respect to whether the ECG pads are compromising the X-ray image.

According to an embodiment, there is provided a computer program product or non-transitory medium comprising instructions, that when executed by a processor, cause the processor to perform all of the steps of any of the herein disclosed methods.

According to an embodiment, the methods 11^{∗} and 12^{∗} may be implemented in any suitable processor capable of performing all the steps of these methods.

The processor may further be in communication with a image acquisition device or a suitable memory or data storage from which the processor receives 101 the medical image. Suitable image acquisition devices include but are not limited to: X-ray image acquisition devices, CT image acquisition devices, MR image acquisition devices and ultrasound image acquisition devices. Suitable memories may for example be, but not limited to, a local or remote server, a wired or wireless connected hard drive, a Picture Archiving and Communication System (PACS), etc.

The processor may further be in communication with an optical image acquisition device or a suitable memory or data storage from which the processor receives 101 the at least one optical image. Suitable optical image acquisition devices may be cameras, RGB(D) cameras (including depth information), infrared cameras, and any other camera and/or sensor that provides optical images of the subject. Suitable memories may for example be, but not limited to, a local or remote server, a wired or wireless connected hard drive, a Picture Archiving and Communication System (PACS), etc.

The processor may further be in communication with a display suitable for displaying any one of: the medical image, the at least one optical image and any of the visual or graphical identifiers as disclosed herein.

According to an embodiment, there is disclosed a medical image processing system comprising a processor configured to perform all of the steps of the methods disclosed herein.

The image processing system may further be in communication with:
- a medical image acquisition module configured to acquire the medical image; and
- a camera module configured to acquire the at least one optical image.

Fig. 4 is a schematic diagram of a processor circuit 500, according to aspects of the present disclosure. As shown, the processor circuit 500 may include a processor 506, a memory 503, and a communication module 508. These elements may be in direct or indirect communication with each other, for example via one or more buses.

The processor 506 as envisaged by the present disclosure may include a central processing unit (CPU), a graphical processing unit (GPU), a digital signal processor (DSP), an application specific integrated circuit (ASIC), a controller, a field programmable gate array (FPGA) device, another hardware device, a firmware device, or any combination thereof configured to perform the operations described herein. The processor 506 may also be implemented as a combination of computing devices, e.g., a combination of a DSP and a microprocessor, a plurality of microprocessors, one or more microprocessors in conjunction with a DSP core, or any other such configuration. The processor 506 may also implement various deep learning networks, which may include a hardware or a software implementation. The processor 506 may additionally include a preprocessor in either hardware or software implementation.

The memory 503 as envisaged by the present disclosure may be any suitable storage device, such as a cache memory (e.g., a cache memory of the processor 506), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, other forms of volatile and non-volatile memory, or a combination of different types of memory. The memory may be distributed among multiple memory devices and/or located remotely with respect to the processor circuit. In an embodiment, the memory 503 may store instructions 505. The instructions 505 may include instructions that, when executed by a processor 506, cause the processor 506 to perform the operations described herein.

Instructions 505 may also be referred to as code. The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may include a single computer-readable statement or many computer-readable statements. Instructions 505 may be in the form of an executable computer program or script. For example, routines, subroutines and/or functions may be defined in a programming language including but not limited to Python, C, C++, C#, Pascal, BASIC, API calls, HTML, XHTML, XML, ASP scripts, JavaScript, FORTRAN, COBOL, Perl, Java, ADA, .NET, and the like. Instructions may also include instructions for machine learning and/or deep learning.

The communication module 608 can include any electronic circuitry and/or logic circuitry to facilitate direct or indirect communication of data between the processor circuit 500, and for example an external display (not shown) and/or an imaging device or system such as an X-ray imaging system. In that regard, the communication module 608 can be an input/output (I/O) device. The communication may be performed via any suitable means. For example, the communication means may be a wired link, such as a universal serial bus (USB) link or an Ethernet link. Alternatively, the communication means may be a wireless link, such as an ultra-wideband (UWB) link, an Institute of Electrical and Electronics Engineers (IEEE) 802.11 WiFi link, or a Bluetooth link.

The invention further discloses a system, e.g., a computational system comprising a processor circuit 500, a medical imaging system such as an X-ray imaging system, a CT imaging system, an MR imaging system, an ultrasound imaging system, or any other suitable system, wherein the system is configured to perform method 11^{∗} and/or 12^{∗}.

One such exemplary medical imaging system provided in Fig. 5. For convenience the imaging system will be described with reference to an X-ray medical imaging system, but the medical imaging system may also be a CT, MR, ultrasound, or any other medical imaging system.

Fig. 5 shows schematically an exemplary X-ray imaging system 600 imaging an object 605, e.g., body part of a patient. The imaging system 600 comprises an X-ray detector 602 and an X-ray imaging device 610 comprising an X-ray source 612, a processing apparatus 614 and a user interface 616. The user interface 616 may also be external to the X-ray imaging device. The user interface may further comprise a display and a suitable input unit for a user or operator to input commands. The X-ray detector 602 is spaced from the X-ray source 612 to accommodate the object to be imaged 605. The processing apparatus 614 may for example comprise the processor circuit 500, but may also comprise any other suitable processing device. The X-ray system may further be in communication with an external optical imaging sensor 618 configured to acquire optical images of the subject 605. The optical imaging sensor may be any suitable optical imaging camera including but not limited to a digital camera, an analog camera, an infrared camera, an RGB camera, an RGB(D) camera, etc. The optical imaging sensor may be 2D or 3D.

In a typical X-ray imaging exam workflow, first a subject is positioned. During this time, the optical imaging sensor 618 may for example be collecting optical images.

Once the subject is in position, including the right posture, the following steps are followed by the medical image acquisition device:
i. The X-ray source 612 generates a beam of X-rays, which is directed towards the object 605 (e.g., a body part of a patient) to be imaged. The X-rays pass through the object 605 and are attenuated (absorbed or scattered) to varying degrees by the different tissues and structures they encounter.
ii. The attenuated X-ray beam then passes through the X-ray detector 602, which converts the X-rays into an electrical signal that can be processed by a processing apparatus 614.
iii. The processing apparatus 614 then processes the electrical signal and converts it into a grayscale image, where different shades of gray represent different levels of X-ray attenuation. In embodiments the obtained X-ray image may further be displayed on a user interface 616 for review by a radiologist or other medical professional.

In some cases, contrast agents may further be used to enhance the visibility of certain structures or tissues. For example, iodine-based contrast agents may be injected into the bloodstream to visualize blood vessels or organs such as the liver or kidneys.

Such an exemplary X-ray imaging system 600 may further be configured to perform method 100, wherein the method is carried out by the processing apparatus 614 and any user interaction may occur via the user interface 616, which may include a keyboard, joystick, touchscreen, or any other suitable device to allow for user interaction.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. Measures recited in mutually different dependent claims may advantageously be used in combination.

## Claims

1. A computer-implemented method (11^{∗}) for processing medical and optical images, the method comprising:
- receiving (101, 111):
- a medical image (200b, 300b) of a subject; and
- at least one optical image (200a, 300a) of the subject; and
- processing (102, 112) the at least one optical image and the medical image to:
- determine (112a) a location of a potentially compromising feature (202a, 302a) in the at least one optical image; and
- based on the determined location of the potentially compromising feature in the at least one optical image, determine (112b) a corresponding location (202b, 302b) in the medical image.

2. The method of claim 1, wherein the step of processing the at least one optical image and the medical image further comprises:
- based on the determined location of the potentially compromising feature in the at least one optical image, determining a corresponding location on the subject, and
wherein the step to determine the corresponding location in the medical image is further based on the corresponding location on the subject.

3. The method of any one of the preceding claims wherein the at least one optical image comprises a sequence of optical images (300a) obtained during positioning of the subject for taking the medical image; and,
wherein the step of processing the at least one optical image and the medical image further comprises:
- determining an optical image of the sequence of optical images in which
- the corresponding location on the subject is visible and/or
- the location of the potentially compromising feature in the at least one optical image is visible.

4. The method of any one of the preceding claims, wherein the step of processing the at least one optical image and the medical image, further comprises:
- determining a probability of a presence of the potentially compromising feature in the medical image.

5. The method of any one of the preceding claims further comprising:
- determining whether the corresponding location in the medical image interferes with a region of interest.

6. A computer-implemented method (12^{∗}) for processing medical and optical images, the method comprising:
- receiving (101, 121):
- a medical image (200b, 300b) of a subject; and
- at least one optical image (200a, 300a) of the subject; and
- processing (102, 122) the at least one optical image and the medical image to:
- determine (122a) a location of an anomaly (202b, 302b) in the medical image;
and
- based on the determined location of the anomaly in the medical image, determine (122b) a corresponding location (202a, 302a) in the at least one optical image.

7. The method of claim 6 wherein processing the at least one optical image and the medical image, further comprises,
- based on the determined location of the anomaly in the medical image, determining a corresponding location on the subject; and
wherein the step to determine the corresponding location in the at least one optical image is further based on the corresponding location on the subject.

8. The method of any one of claims 6 to 7, wherein the at least one optical image comprises a sequence of optical images (300a) obtained during positioning of the subject for taking the medical image; and,
wherein the step of processing the at least one optical image and the medical image further comprises:
- determining an optical image of the sequence of optical images in which
- the corresponding location on the subject is visible and/or
- the corresponding location in the at least one optical image is visible.

9. The method of any one of claims 6 to 7, wherein the step of processing the at least one optical image and the medical image further comprises:
- determining a probability of a cause of the anomaly by a potentially compromising feature at the corresponding location in the at least one optical image.

10. The method of any one of claims 6 to 9 further comprising:
- determining whether the location of the anomaly in the medical image interferes with a region of interest.

11. The method of any of the preceding claims, further comprising:
- aligning at least one of the at least one optical image and the medical image with respect to each other.

12. The method of any of the preceding claims, wherein the step of processing the at least one optical image and the medical image is performed with a machine learning model, wherein optionally the machine learning model is trained by a plurality of image pairs, each image pair comprising:
- an annotated medical image of the subject and
- at least one corresponding annotated optical image of the subject.

13. A medical image processing system (500, 600), the system comprising:
- a processor (506, 614) configured to perform all the steps of the method according to any of claims 1 to 12.

14. The system of claim 13 further comprising:
- a medical image acquisition device (602, 612) configured to acquire the medical image;
- an optical imaging sensor (618) configured to acquire the at least one optical image; and
- a display (616) configured to display the medical image and/or the at least one optical image.

15. A computer-program product comprising instructions that, when executed by a processor, cause the processor to perform all of the steps of the method according to any one of claims 1 to 12.
